# FASCICULE DE BREVET EUROPEEN

(11) **EP 2 108 910 B1**
(45) Date de publication et mention de la délivrance du brevet: **22.05.2019**
(21) Numéro de dépôt: 09157512.6
(22) Date de dépôt: 07.04.2009
(51) Int. Cl.: F28D 7/10, F28D 20/02, F25B 40/00, B60H 1/00

(54) **ÉCHANGEUR INTERNE COMPORTANT UN MOYEN DE STOCKAGE THERMIQUE ET BOUCLE INCORPORANT UN TEL ÉCHANGEUR**
INNERE WÄRMETAUSCHER UMFASSEND EIN WÄRMESPEICHERMITTEL UND KREISLAUF MIT EINEM SOLCHEN WÄRMETAUSCHER
INTERNAL HEAT EXCHANGER COMPRISING A MEANS FOR THERMAL STORAGE AND LOOP INCORPORATING SUCH HEAT EXCHANGER

(30) Priorité: 10.04.2008 FR 0801974
(43) Date de publication de la demande: 14.10.2009
(73) Titulaire: Valeo Systèmes Thermiques, 78321 Le Mesnil St Denis Cedex (FR)
(72) Inventeur: Beonuali, Jugurtha, 92140, Clamart (FR)
(74) Mandataire: Metz, Gaëlle

(56) Documents cités:
- EP-A- 1 533 154
- WO-A-02/01133
- WO-A-2006/007663
- DE-A1- 10 140 630
- FR-A- 2 831 950
- FR-A1- 2 861 166
- JP-A- H02 220 920
- JP-A- 2004 050 991
- JP-A- 2006 044 579
- US-A- 2 884 768
- US-A- 5 259 214
- US-A1- 2006 218 954

## Description

Le secteur technique de la présente invention est celui des échangeurs de chaleur montés dans une boucle de climatisation dans laquelle circule un fluide réfrigérant.

Ces boucles ou circuits de climatisation sont conventionnellement équipés d'un compresseur, qui a pour but d'élever la pression du fluide réfrigérant, suivi d'un condenseur ou refroidisseur de gaz, dont l'objectif est d'abaisser la température du fluide réfrigérant, suivi d'un dispositif de détente destiné à abaisser la pression du fluide réfrigérant. La boucle se termine enfin par un passage du fluide réfrigérant au sein d'un évaporateur qui échange avec un flux d'air envoyé destiné à refroidir ou conditionner l'habitacle d'un véhicule équipé d'une telle boucle de climatisation. Le fluide réfrigérant circulant au travers de ces composants (compresseur, condenseur ou refroidisseur de gaz, dispositif de détente, évaporateur) est un fluide sous-critique qui peut être de façon non limitative du R-134a, du HFO-1234yf ou du R-152a ou un fluide super-critique du type dioxyde de carbone portant la référence R744.

La partie de la boucle ou du circuit comprise entre le sortie du compresseur et l'entrée du dispositif de détente est une partie dite haute pression alors que la zone parcourue par le fluide entre la sortie du dispositif de détente et l'entrée du compresseur est une partie dite basse pression, la pression du fluide réfrigérant dans cette partie étant nécessairement inférieure ou égale à celle existante dans la partie dite haute pression.

Une boucle de climatisation telle que décrite ci-dessus peut aussi être équipée d'un échangeur supplémentaire connu sous le nom d'échangeur interne, comme cela est connu du document US2884768A. Ce dernier n'échange pas avec l'air ambiant comme c'est le cas de l'évaporateur ou du condenseur. Au contraire, il a pour objectif de provoquer un échange thermique entre le fluide réfrigérant circulant dans la partie basse pression et le fluide réfrigérant circulant la partie haute pression de sorte à améliorer le niveau de performance globale de la boucle (puissance frigorifique et efficacité énergétique). Ce type d'échangeur est connu du document EP1767887A1.

Un échangeur de chaleur selon le préambule de la revendication 1 est connu du document JP-02220920 A.

Dans les embouteillages, lorsque le moteur du véhicule qui entraîne le compresseur tourne au ralenti, on constate une dégradation de la performance de la boucle de climatisation. En d'autres termes, la température à l'intérieur de l'habitacle du véhicule ne peut pas être maintenue au niveau demandé par l'utilisateur ce qui provoque un inconfort pour ce dernier.

L'invention vient améliorer la situation.

L'invention a donc pour objet un échangeur de chaleur pour un circuit de réfrigérant d'une installation de climatisation d'un véhicule automobile, ledit échangeur comprenant au moins un premier circuit interne parcouru par un fluide réfrigérant soumis à une première pression et qui échange des calories avec au moins un second circuit interne de l'échangeur parcouru par le fluide réfrigérant soumis à une deuxième pression supérieure à la première pression, l'échangeur comprenant au moins une cavité apte à contenir un moyen de stockage thermique qui échange avec le premier circuit interne et/ou le deuxième circuit interne, dans lequel le moyen de stockage thermique est stocké dans ladite cavité, le dit échangeur comprenant au moins deux cavités aptes à contenir le moyen de stockage thermique disposées de part et d'autre d'un même premier circuit interne et d'un même deuxième circuit interne. On comprend donc que cet échangeur, appelé échangeur interne comprend une zone destinée à contenir un matériau à changement de phase. Ainsi, durant les phases de production de froid, par exemple quand la charge thermique est faible ou lorsque le moteur du véhicule entraînant le compresseur tourne vite, l'échangeur interne capte une partie de la puissance frigorifique disponible au niveau du circuit basse pression, c'est-à-dire au niveau du deuxième circuit interne de l'échangeur (entre l'évaporateur et le compresseur) pour la transférer au matériau à changement de phase installé dans la cavité. Quand les conditions thermiques deviennent plus sévères, par exemple quand le véhicule est au ralenti dans les embouteillages, l'énergie emmagasinée dans l'échangeur interne est alors restituée au fluide réfrigérant circulant dans le premier circuit interne de l'échangeur, côté haute pression (entre le condenseur et le détendeur) de sorte à maintenir un niveau de performance acceptable au niveau de l'évaporateur.

Selon une première caractéristique de l'invention, le premier circuit interne, le deuxième circuit interne et la cavité sont contenus dans une enceinte étanche à l'air et délimitant l'échangeur. On comprend ici qu'il s'agit d'un échangeur fluide réfrigérant/fluide réfrigérant/matériau à changement de phase sans échange avec un flux d'air en dehors de l'air ambiant entourant l'échangeur interne.

Selon une deuxième caractéristique de l'invention, le premier circuit interne et le deuxième circuit interne sont parcourus par le même fluide réfrigérant. On comprend ici qu'il s'agit d'une même boucle de climatisation qui est utilisée avec l'échangeur selon l'invention.

Selon une autre caractéristique de l'invention, le premier circuit interne comporte au moins une première entrée et une première sortie de fluide réfrigérant, le deuxième circuit interne comporte au moins une deuxième entrée et une deuxième sortie de fluide réfrigérant, lesdites entrées et sorties étant distinctes. On comprend donc que deux couples d'entrées et de sorties sont constitués, les couples n'étant pas reliés entre eux. Le moyen de stockage thermique est un matériau à changement de phase (PCM : paraffines de type hydrocarbures saturés - CₙH₂ₙ₊₂) susceptible de capter les frigories du fluide réfrigérant circulant dans la partie basse pression du circuit (entre la sortie évaporateur et l'entrée compresseur) et de les restituer quand cela est nécessaire (phase de ralenti par exemple) au réfrigérant circulant dans la partie haute pression du circuit (entre la sortie condenseur et l'entrée détendeur).

Selon encore une autre caractéristique de l'invention, ladite cavité est adjacente au premier circuit interne et/ou au deuxième circuit interne. De cette manière, on s'assure d'une proximité entre la source de frigorie et le matériau à changement de phase pour maximiser l'échange thermique.

La cavité forme un volume fermé à l'intérieur de l'enceinte délimitant l'échangeur. On comprend par cette caractéristique que la cavité est une zone évidée ou rapportée à l'intérieur de l'échangeur, et non une pièce rapportée à l'extérieur de l'échangeur selon l'invention.

Avantageusement, la cavité échange à la fois avec le premier circuit interne et avec le deuxième circuit interne. Avec cette disposition, on s'assure que la cavité dans laquelle est installé le matériau à changement de phase est en contact étroit avec le deuxième circuit interne où le fluide circule à basse pression de sorte à fournir l'énergie pendant la phase de chargement, ou d'accumulation, du moyen de stockage thermique tout en étant aussi en contact avec le premier circuit interne (réfrigérant à haute pression) de sorte à restituer efficacement les frigories au fluide réfrigérant quand le moteur du véhicule est au ralenti.

Avantageusement encore, la cavité est interposée entre le premier circuit interne et le deuxième circuit interne.

L'échangeur de chaleur selon l'invention comprend au moins deux cavités aptes à contenir le moyen de stockage thermique disposées de part et d'autre d'un même premier circuit interne et d'un même deuxième circuit interne. On augmente ainsi la quantité de moyen de stockage thermique ou matériau à changement de phase de sorte à allonger le temps pendant lequel l'échangeur selon l'invention restitue l'énergie emmagasinée de sorte à maintenir un bon niveau de confort dans l'habitacle même si la phase de ralenti du véhicule se prolonge.

L'échangeur de chaleur comprend au moins une cavité qui est délimitée par une paroi commune à l'enceinte délimitant l'échangeur. L'enceinte forme l'enveloppe extérieure de l'échangeur et une des grandes faces de la cavité est alors délimitée par cette enveloppe extérieure. On comprend donc que le matériau à changement de phase est tout ou partie à la périphérie extérieure de l'échangeur selon l'invention.

Selon une autre caractéristique de l'invention, le premier circuit interne, le deuxième circuit interne et la cavité sont délimités par des plaques sensiblement planes. L'échangeur est alors à plaques avec une circulation du fluide réfrigérant selon une surface plane. Dans une autre variante, le premier circuit interne, le deuxième circuit interne et la cavité sont délimités par des parois sensiblement cylindriques formant ainsi des canaux co-axiaux.

L'échangeur de chaleur, autrement appelé échangeur interne, trouve une application toute particulière dans un circuit ou boucle de climatisation comprenant un compresseur, un refroidisseur de gaz ou condenseur, un dispositif de détente et un évaporateur parcouru dans cet ordre par un fluide réfrigérant, le fluide circulant dans une première partie du circuit comprenant le refroidisseur et comprise entre le compresseur et l'organe de détente est soumis à une première pression, le fluide circulant dans une seconde partie du circuit comprenant l'évaporateur et comprise entre l'organe de détente et le compresseur est soumis à une deuxième pression inférieure à la première pression.

Un tout premier avantage selon l'invention réside dans l'absence de dégradation du confort thermique quand le véhicule est en phase de ralenti, qui se traduit par :
- une vitesse de rotation du compresseur faible,
- un mauvais échange au niveau du refroidisseur de gaz ou condenseur car le véhicule n'est pas soumis à la circulation de l'air,
- une température élevée au niveau du refroidisseur de gaz ou condenseur consécutive à l'échauffement parasite du moteur du véhicule.

D'autres caractéristiques, détails et avantages de l'invention ressortiront plus clairement à la lecture de la description donnée ci-après en relation avec des dessins dans lesquels :
- la figure 1 est une vue schématique d'une boucle de climatisation incorporant un échangeur selon l'invention,
- la figure 2 est une vue schématique de l'échangeur selon l'invention selon une première variante de réalisation,
- la figure 3 est une vue schématique de l'échangeur selon l'invention selon une deuxième variante de réalisation,
- la figure 4 est une vue schématique d'un exemple d'échangeur de chaleur,
- les figures 5 à 7 illustrent des exemples de l'échangeur de type co-axial,
- la figure 8 est un graphique qui illustre le bénéfice apporté par l'objet de l'invention.

Les figures citées ci-dessus illustrent la mise en oeuvre de l'invention et pourront servir le cas échéant à définir l'objet de l'invention.

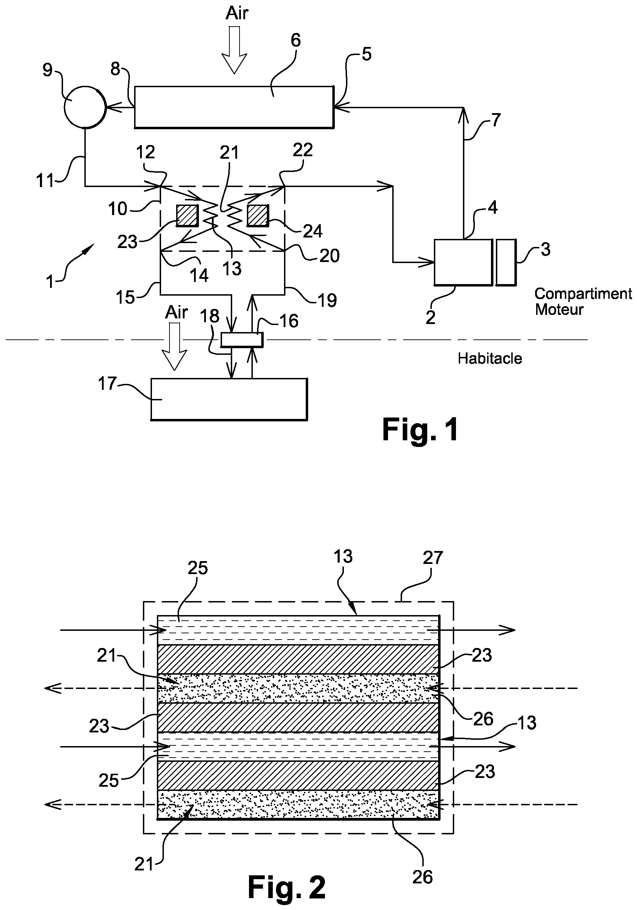

La figure 1 illustre une boucle 1 ou circuit de climatisation ou circuit de réfrigérant comprenant un compresseur 2 à cylindrée fixe ou à cylindrée variable équipé d'un embrayage 3 classiquement relié au moteur d'un véhicule automobile et entraîné par une courroie. En alternative, le compresseur peut être du type « sans embrayage ». La sortie 4 du compresseur 3 est reliée à une entrée 5 d'un condenseur ou refroidisseur de gaz 6 par l'intermédiaire d'une conduite 7. Quand la boucle est parcourue par un fluide sous-critique tel que le R134a (ou de façon non exclusive le HFO-1234yf ou le R-152a), il s'agira d'un condenseur puisque ce dernier provoque un changement de phase (de la phase gazeuse à la phase liquide) du fluide réfrigérant quand ce dernier traverse le condenseur en étant soumis à un échange avec l'air extérieur du véhicule. Le condenseur ou refroidisseur de gaz 6 présente une sortie 8 reliée directement ou via une conduite à une bouteille 9. Le sortie de la bouteille 9 est quant à elle raccordée à un échangeur 10 selon l'invention par l'intermédiaire d'une conduite ou canalisation référencée 11. Une première entrée 12 de l'échangeur de chaleur 10, autrement appelé échangeur interne, met en communication un premier circuit interne 13 dit haute pression avec la conduite 11. Ce circuit interne 13 se termine par une première sortie 14, elle-même reliée à une conduite ou tuyauterie référencée 15.

Toujours dans le sens de circulation du fluide réfrigérant au sein de la boucle de climatisation, la conduite 15 est raccordée à l'entrée d'un dispositif de détente 16. Ce dernier gère le débit et la quantité de fluide réfrigérant à admettre dans un évaporateur 17. Le dispositif de détente 16 est raccordé à l'entrée de l'évaporateur 17 par l'intermédiaire d'une conduite 18. Le fluide réfrigérant, en traversant l'évaporateur 17, cède ses frigories à l'air traversant l'évaporateur de sorte à refroidir l'habitacle du véhicule. Le fluide réfrigérant passe alors d'une phase liquide ou diphasique à une phase gazeuse au moyen de la chaleur apportée par l'air que l'on cherche à refroidir. Le fluide réfrigérant, en phase gazeuse ou diphasique, sort de l'évaporateur 17 où il est conduit au dispositif de détente 16. Ce dernier lit alors le niveau de surchauffe du fluide réfrigérant et peut agir sur le débit en entrée de l'évaporateur.

Un sortie du dispositif de détente 16 est reliée par une conduite 19 à une deuxième entrée 20 de l'échangeur de chaleur 10 selon l'invention. Un second circuit interne 21 mis en relation avec la deuxième entrée 20 se termine par une deuxième sortie 22.

Le deuxième circuit interne 21 est parcouru par le fluide réfrigérant dans un état dit basse pression comparé au niveau de pression subit par le fluide réfrigérant qui traverse le premier circuit interne 13. On comprendra que la pression dans le deuxième circuit interne 21 est plus faible que la pression dans le premier circuit interne 13 quand la boucle est en phase de fonctionnement, c'est-à-dire lorsque le compresseur 2 est en fonctionnement.

L'échangeur de chaleur 10 comprend en outre au moins une cavité 23 contenant un moyen de stockage thermique, en particulier un matériau à changement de phase. Cette cavité 23 échange thermiquement avec le premier circuit interne 13. Cette cavité 23 et le premier circuit interne sont donc étroitement liés, par exemple par superposition de plaques qui délimitent plusieurs sous-circuits interne 13 en contact thermique avec plusieurs sous-cavités contenant le matériau à changement de phase.

On notera que l'échangeur de chaleur 10 comprend une deuxième cavité 24 apte à contenir un moyen de stockage thermique identique à celui contenu dans la cavité 23. Cette deuxième cavité 24 échange avec le deuxième circuit interne 21 de la même manière que l'échange entre le premier circuit interne 13 et la première cavité 23. Dans une variante de réalisation, les deux cavités 23 et 24 sont reliées fluidiquement entre elles. Dans une autre variante, la première 23 et la deuxième cavité 24 sont indépendantes l'une de l'autre et sont par exemple remplies par des orifices distincts.

La figure 2 illustre la constitution interne de l'échangeur de chaleur selon l'invention. Le premier circuit interne 13 est parcouru par le fluide réfrigérant soumis à la haute pression, ce dernier étant représenté sur la figure par une multiplicité de points rapprochés. Dans cette exemple de réalisation, l'échangeur 10 est fabriqué selon une technologie dite à plaques entre lesquelles sont délimités les circuits internes 13 et 21. Le premier circuit interne 13 est ici divisé en deux chambres référencées 25 alimentées par une boîte d'entrée commune reliée à la première entrée 12 de l'échangeur de chaleur 10.

Immédiatement adjacent à chaque chambre 25 du premier circuit interne 13 est présente la cavité 23 et/ou 24. Le moyen de stockage thermique implanté dans ces cavités est ici représenté par des hachures. Ces cavités s'étendent sur une longueur équivalente à la longueur des chambres 25 et sont séparées de ces dernières par une plaque constitutive de l'échangeur 10. L'échange de chaleur se produit donc aisément entre le premier circuit interne 13 et au moins l'une des cavités 23 car les calories traversent aisément la plaques en aluminium qui sépare ces deux éléments.

Le deuxième circuit interne 21 est matérialisé par deux chambres 26 chacune immédiatement adjacente à l'une des cavités 23. Le deuxième circuit interne 21 est parcouru par le fluide réfrigérant dit à basse pression, ce dernier étant représenté par une multiplicité de points clairsemés.

On notera que le premier circuit interne 13 dispose de sa propre entrée et de sa propre sortie, ces dernières étant distinctes et séparées de l'entrée et de la sortie du deuxième circuit interne. De la sorte, on garantit une totale indépendance entre le circuit dit haute pression et le circuit dit basse pression. On notera également que le sens de circulation du fluide réfrigérant au sein du premier circuit interne 13 est opposé au sens de circulation du fluide réfrigérant parcourant le deuxième circuit interne 21.

Les cavités 23 sont des chambres ou des volumes fermés qui ne communiquent pas avec l'extérieur, à l'exception de l'orifice de remplissage nécessaire à l'introduction du matériau à changement de phase. Une fois ce remplissage effectué, l'orifice est obstrué définitivement, par brasage notamment.

La figure 1 montre une disposition des cavités 23 prises en sandwich entre le premier circuit interne 13 haute pression et le deuxième circuit interne 21 basse pression. Cet ensemble formé par empilement de plaques délimite une enceinte extérieure 27 étanche à l'air environnant l'échangeur selon l'invention. On comprendra ainsi que cet échangeur est prévu pour permettre un transfert de calories entre le premier circuit interne 13, le deuxième circuit interne 21 et les cavités 23 mais pas avec un flux d'air extérieur. Autrement dit, cet échangeur de chaleur selon l'invention n'est pas traversé par un flux d'air, comme cela peut-être le cas d'un évaporateur par exemple.

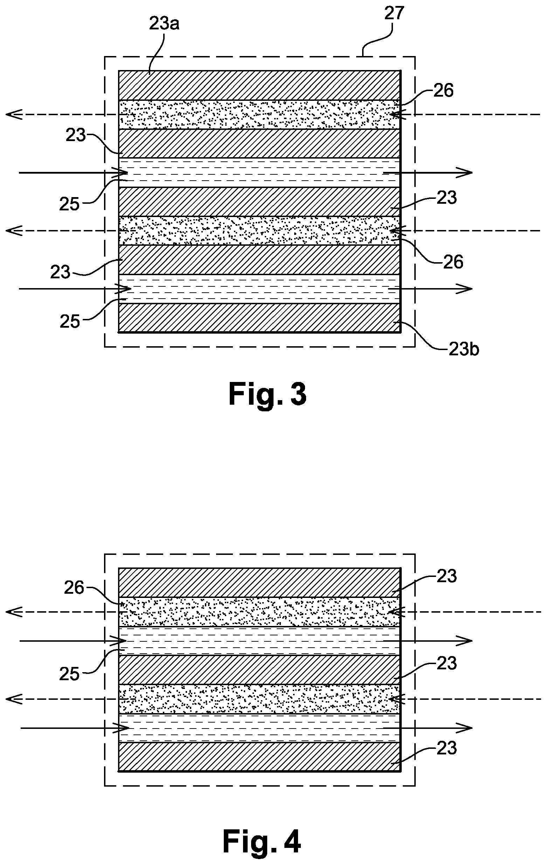

La figure 3 illustre une variante de l'invention comprenant l'enceinte 27 à l'intérieur de laquelle sont installés les chambres 25 et 26 des premier et deuxième circuits internes et au moins une cavité 23 destinée à recevoir et contenir le moyen de stockage thermique, c'est-à-dire un fluide à changement de phase. L'organisation entre les chambres 25 et 26 et les cavités est identique à celle représentée à la figure 2 à l'exception de l'adjonction d'au moins une cavité 23a supplémentaire placée spécifiquement en contact direct avec l'enceinte 27. La cavité 23a vient donc s'interposer entre la chambre 26 du deuxième circuit interne et le milieu extérieur (l'air environnant l'échangeur). De cette manière, la chambre 26 n'est pas en contact avec ce milieu extérieur ce qui permet de limiter les déperditions thermiques de cette chambre en direction de l'air entourant l'échangeur selon l'invention.

La cavité 23a et une cavité 23b ont ainsi chacune une paroi commune, par exemple via la dernière plaque de l'échangeur, avec l'enceinte 27 délimitant l'échangeur de chaleur. Les cavités 23a et 23b se comportent alors comme des zones tampons ou des isolants thermiques qui protègent d'un côté la chambre 26 du deuxième circuit interne, et de l'autre la chambre 25 du premier circuit interne.

En bref, la variante de la figure 3 comporte une alternance de plaques qui définit dans cet ordre une cavité 23a contenant un matériau à changement de phase délimitant l'enceinte 27, une chambre 26 parcourue par le fluide réfrigérant à basse pression, une cavité 23 contenant un matériau à changement de phase, une chambre 25 parcourue par le fluide réfrigérant à haute pression, une cavité 23 contenant un matériau à changement de phase, une chambre 26 parcourue par le fluide réfrigérant à basse pression, une cavité 23 contenant un matériau à changement de phase, une chambre 25 parcourue par le fluide réfrigérant à haute pression, une cavité 23 contenant un matériau à changement de phase délimitant l'enceinte 27. On comprend donc que la cavité 23 échange à la fois avec le premier circuit interne (chambre 25) et le deuxième circuit interne (chambre 26) car la cavité est interposée entre ces deux circuits internes.

La variante proposée figure 3 permet d'intégrer une masse de matériau à changement de phase plus importante (maintien du niveau de confort pour une durée plus importante).

La figure 4 montre une variante de l'échangeur de chaleur 10 différente de la figure 3 en ce que la chambre 25 du premier circuit interne est en contact thermique direct avec la chambre 26 du deuxième circuit interne. La cavité 23 est alors interposée toutes les deux chambres 25 et 26. La variante proposée à la figure 4 permet d'avoir un échange plus important entre les parties basse pression et haute pression de la boucle de climatisation au sein de l'échangeur interne.

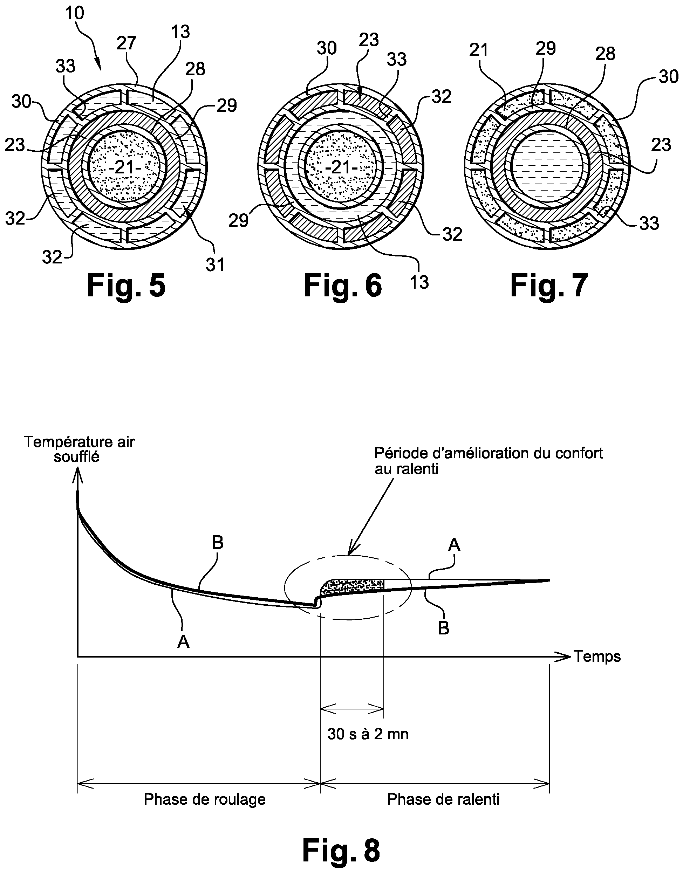

La figure 5 montre une variante de réalisation de l'échangeur de chaleur 10 différente des variantes précédentes où les chambres sont délimitées par des plaques planes. Dans cette variante, les parois délimitant l'enceinte 27 présentent une forme tubulaire, voire cylindrique. Un tube central 28 délimite le deuxième circuit interne 21. Un premier tube 29 concentrique avec le tube central 28 est d'un diamètre supérieur à ce dernier de telle sorte à libérer une cavité 23 qui reçoit le moyen de stockage thermique. Un deuxième tube 30 de diamètre supérieur au premier tube 29 permet de ménager la chambre 25 du premier circuit interne de l'échangeur de chaleur 10 selon l'invention. La chambre 25 est divisée en huit canaux 32 au moyen de bras 33 qui s'étendent entre le premier tube 29 et le deuxième tube 30. Outre la délimitation des canaux 32, ces bras se comportent comme des renforts mécaniques qui permettent de contrecarrer les efforts consécutifs à la haute pression du fluide réfrigérant circulant entre le premier tube 29 et le deuxième tube 30. On constate dans cette variante que le moyen de stockage thermique échange à la fois avec le fluide réfrigérant qui parcourt les canaux 32 et le fluide réfrigérant qui circule au coeur du tube central 28. Le sens de circulation du fluide réfrigérant dans les canaux 32 et dans le tube central 28 peut être identique ou opposé, autrement dit à contre-courant.

La figure 6 illustre une variante qui diffère de la figure 5 en ce qui concerne la localisation de la cavité 23 qui contient le moyen de stockage thermique ou liquide à changement de phase. La cavité 23 est ici séparée en canaux 32 chacun délimité par le premier tube 29, le deuxième tube 30 et deux bras 33. Selon cette variante, le fluide réfrigérant soumis à la haute pression qui circule dans le premier circuit interne 13 échange d'un côté avec le fluide réfrigérant soumis à basse pression (deuxième circuit interne 21) et avec le matériau à changement de phase. On notera que ce dernier est placé à l'extérieur des premier et deuxième circuits internes de telle sorte qu'il exerce une isolation thermique entre le milieu ambiant, par exemple le compartiment moteur surchauffé par ce dernier, et le fluide réfrigérant qui circule au sein de l'échangeur de chaleur 10 selon l'invention.

La figure 7 met en avant une variante de l'échangeur représenté aux figures 5 et 6. Les éléments identiques présentent les mêmes références. Le premier circuit interne 13 dans lequel le fluide à haute pression circule est délimité par le tube central 28. Autour de ce tube central 28 et co-axial à ce dernier est présent le premier tube 29 de sorte à délimiter une espace ou une cavité 23 qui reçoit le moyen de stockage thermique. Autour du premier tube 29 est disposé un deuxième tube 30 entre lesquels prend place le deuxième circuit interne 21. Ici aussi, huit bras 33 relient le premier tube 29 au deuxième tube 30 de sorte à reprendre les efforts mécaniques imposés par le fluide réfrigérant soumis à la pression de fonctionnement d'un fluide super-critique.

La figure 8 montre le bénéfice apporté par l'échangeur selon l'invention. En abscisse de ce graphique est représenté le temps écoulé après la mise en fonctionnement de l'installation de climatisation alors que l'ordonnée illustre la température de l'air soufflé dans la cabine du véhicule automobile. La phase de roulage illustre l'abaissement de la température dans l'habitacle quand la puissance disponible sur le compresseur est suffisante pour fournir les conditions de confort demandées par l'utilisateur. C'est le cas par exemple quand la vitesse de rotation du moteur qui entraîne le compresseur est au dessus de 1500 tours /minute.

La phase de ralenti correspond au cas où le moteur du véhicule tourne le plus lentement au préjudice du compresseur à qui l'installation demande de fournir plus de puissance pour maintenir les conditions de confort.

La courbe A illustre le comportement de la température dans l'habitacle pour une boucle de climatisation n'incorporant pas l'échangeur selon l'invention alors que la courbe B illustre la température dans l'habitacle d'un véhicule équipé d'une installation de climatisation comportant l'échangeur selon l'invention. On constate que au début de la phase de ralenti, par exemple pendant une durée allant de trente secondes à deux minutes, la température illustrée par la courbe B est plus basse que la température illustrée par la courbe A.

En pratique, pendant la phase de roulage, la puissance disponible au compresseur est très nettement supérieure au besoin du véhicule si bien qu'une partie de cet excédent de puissance est utilisée pour charger le moyen de stockage thermique. Ce dernier est alors refroidi et emmagasine des frigories par échange entre le fluide réfrigérant circulant dans la partie basse pression du circuit de climatisation et le matériau à changement de phase.

Pendant le début de la phase de ralenti, le moyen de stockage thermique restitue l'énergie stockée en échangeant avec le fluide circulant dans la partie haute pression du circuit de climatisation de sorte à maintenir une alimentation satisfaisante de l'évaporateur et ainsi maintenir la température plus proche de la demande de l'utilisateur. Le gain espéré avec l'invention est de 1 à 3°C entre 30 secondes et 2 minutes (en fonction de la quantité de matériau à changement de phase installée dans l'échangeur).

L'invention est divulguée ici dans une forme particulière qui n'a pas pour vocation à limiter la portée de l'invention.

## Revendications

1. Echangeur de chaleur (10) pour un circuit de réfrigérant d'une installation de climatisation d'un véhicule automobile, ledit échangeur comprenant au moins un premier circuit interne (13) parcouru par un fluide réfrigérant soumis à une première pression et qui échange thermiquement au moins avec un deuxième circuit interne (21) de l'échangeur parcouru par le fluide réfrigérant soumis à une deuxième pression inférieure à la première pression, l'échangeur comprenant au moins une cavité (23, 23a, 24) apte à contenir un moyen de stockage thermique qui échange avec le premier circuit interne (13) et/ou le deuxième circuit interne (21), dans lequel le moven de stockage thermique est stocké dans ladite cavité (23, 23a, 24), **caractérisé en ce que** le dit échangeur (10) comprend au moins deux cavités (23, 23a, 24) aptes à contenir le moyen de stockage thermique disposées de part et d'autre d'un même premier circuit interne (13) et d'un même deuxième circuit interne (21).

2. Echangeur de chaleur selon la revendication 1, dans lequel le premier circuit interne (13), le deuxième circuit interne (21) et la cavité (23, 23a, 24) sont contenus dans une enceinte (27) étanche à l'air et délimitant l'échangeur.

3. Echangeur de chaleur selon la revendication 1, dans lequel le premier circuit interne (13) et le deuxième circuit interne (21) sont parcourus par le même fluide réfrigérant.

4. Echangeur de chaleur selon la revendication 1, dans lequel le premier circuit interne (13) comporte au moins une première entrée (12) et une première sortie (14) de fluide réfrigérant, le deuxième circuit interne (21) comporte au moins une deuxième entrée (20) et une deuxième sortie (22) de fluide réfrigérant, lesdites entrées et sorties étant distinctes.

5. Echangeur de chaleur selon la revendication 1, dans lequel ladite cavité (23, 23a, 24) est adjacente au premier circuit interne (13) et/ou au deuxième circuit interne (21).

6. Echangeur de chaleur selon la revendication 5, dans lequel la cavité (23, 23a, 24) forme un volume fermé à l'intérieur de l'enceinte (27) délimitant l'échangeur.

7. Echangeur de chaleur selon l'une quelconque des revendications 1 à 3, dans lequel la cavité (23, 23a, 24) échange à la fois avec le premier circuit interne (13) et avec le deuxième circuit interne (21).

8. Echangeur de chaleur selon la revendication 1, dans lequel la cavité (23, 23a, 24) est interposée entre le premier circuit interne (13) et le deuxième circuit interne (21) .

9. Echangeur de chaleur selon la revendication 1, dans lequel au moins une cavité (23, 23a, 24) est délimitée par une paroi commune à l'enceinte (27) délimitant l'échangeur.

10. Echangeur de chaleur selon la revendication 1, dans lequel le premier circuit interne (13), le deuxième circuit interne (21) et la cavité (23, 23a, 24) sont délimitées par des plaques sensiblement planes.

11. Echangeur de chaleur selon la revendication 1, dans lequel le premier circuit interne (13), le deuxième circuit interne (21) et la cavité (23, 23a, 24) sont délimités par des parois sensiblement cylindriques.

12. Circuit de climatisation (1) comprenant un compresseur (2), un refroidisseur de gaz ou condenseur (6), un dispositif de détente (16) et un évaporateur (17) parcourus dans cet ordre par un fluide réfrigérant, le fluide circulant dans une première partie du circuit comprenant le refroidisseur de gaz ou condenseur (16) et comprise entre le compresseur (2) et l'organe de détente (16) est soumis à une première pression, le fluide circulant dans une seconde partie du circuit comprenant l'évaporateur (17) et comprise entre l'organe de détente (16) et le compresseur (2) est soumis à une deuxième pression inférieure à la première pression, **caractérisé en ce qu'**il comprend en outre un échangeur de chaleur (10) selon l'une quelconque des revendications précédentes.

## Patentansprüche

1. Wärmeaustauscher (10) für einen Kühlmittelkreislauf einer Klimasteuerungsanlage eines Kraftfahrzeugs, der Austauscher umfassend mindestens einen ersten inneren Kreislauf (13), der von einem Kühlfluid durchlaufen wird, das einem ersten Druck ausgesetzt ist und der mit mindestens einem zweiten inneren Kreislauf (21) des Austauschers einen Wärmeaustausch durchführt, der von dem Kühlfluid durchlaufen wird, das einem zweiten Druck ausgesetzt ist, der niedriger als der erste Druck ist,
der Austauscher umfassend mindestens einen Hohlraum (23, 23a, 24), der geeignet ist, ein Wärmespeichermittel zu enthalten, das mit dem ersten inneren Kreislauf (13) und/oder dem zweiten inneren Kreislauf (21) einen Austausch durchführt, wobei das Wärmespeichermittel in dem Hohlraum (23, 23a, 24) gespeichert ist, **dadurch gekennzeichnet, dass** der Austauscher (10) mindestens zwei Hohlräume (23, 23a, 24) umfasst, die geeignet sind, das Wärmespeichermittel zu enthalten, die beiderseits eines selben ersten inneren Kreislaufs (13) und eines selben zweiten inneren Kreislaufs (21) angeordnet sind.

2. Wärmeaustauscher nach Anspruch 1, wobei der erste innere Kreislauf (13), der zweite innere Kreislauf (21) und der Hohlraum (23, 23a, 24) in einem Mantel (27) enthalten sind, der luftdicht ist und den Wärmeaustauscher begrenzt.

3. Wärmeaustauscher nach Anspruch 1, wobei der erste innere Kreislauf (13) und der zweite innere Kreislauf (21) von demselben Kühlfluid durchlaufen werden.

4. Wärmeaustauscher nach Anspruch 1, wobei der erste innere Kreislauf (13) mindestens einen ersten Einlass (12) und einen ersten Auslass (14) für Kühlfluid aufweist, der zweite innere Kreislauf (21) mindestens einen zweiten Einlass (20) und einen zweiten Auslass (22) für Kühlfluid aufweist, wobei die Einlässe und Auslässe separat sind.

5. Wärmeaustauscher nach Anspruch 1, wobei der Hohlraum (23, 23a, 24) an den ersten inneren Kreislauf (13) und/oder den zweiten inneren Kreislauf (21) angrenzt.

6. Wärmeaustauscher nach Anspruch 5, wobei der Hohlraum (23, 23a, 24) ein geschlossenes Volumen im Inneren des Mantels (27) bildet, der den Wärmeaustauscher begrenzt.

7. Wärmeaustauscher nach einem der Ansprüche 1 bis 3, wobei der Hohlraum (23, 23a, 24) mit dem ersten inneren Kreislauf (13) und dem zweiten inneren Kreislauf (21) auf einmal einen Austausch durchführt.

8. Wärmeaustauscher nach Anspruch 1, wobei der Hohlraum (23, 23a, 24) zwischen dem ersten inneren Kreislauf (13) und dem zweiten inneren Kreislauf (21) angeordnet ist.

9. Wärmeaustauscher nach Anspruch 1, wobei mindestens ein Hohlraum (23, 23a, 24) von einer gemeinsamen Wand zum Mantel (27) begrenzt ist, der den Wärmeaustauscher begrenzt.

10. Wärmeaustauscher nach Anspruch 1, wobei der erste innere Kreislauf (13), der zweite innere Kreislauf (21) und der Hohlraum (23, 23a, 24) von Platten begrenzt sind, die im Wesentlichen eben sind.

11. Wärmeaustauscher nach Anspruch 1, wobei der erste innere Kreislauf (13), der zweite innere Kreislauf (21) und der Hohlraum (23, 23a, 24) von Wänden begrenzt sind, die im Wesentlichen zylinderförmig sind.

12. Klimasteuerungskreislauf (1), umfassend einen Kompressor (2), einen Gaskühler oder Kondensator (6), eine Ausdehnungsvorrichtung (16) und einen Verdampfer (17), die in dieser Reihenfolge von einem Kühlfluid durchlaufen werden, wobei das Fluid, das in einem ersten Abschnitt des Kreislaufs strömt, der den Gaskühler oder Kondensator (16) umfasst und zwischen dem Kompressor (2) und dem Ausdehnungselement (16) enthalten ist, einem ersten Druck ausgesetzt ist, wobei das Fluid, das in einem zweiten Abschnitt des Kreislaufs strömt, der den Verdampfer (17) umfasst und zwischen dem Ausdehnungselement (16) und dem Kompressor (2) enthalten ist, einem zweiten Druck ausgesetzt ist, der niedriger als der erste Druck ist, **dadurch gekennzeichnet, dass** er ferner einen Wärmeaustauscher (10) nach einem der vorhergehenden Ansprüche umfasst.

## Claims

1. Heat exchanger (10) for a refrigerant circuit of a motor vehicle air conditioning installation, the said exchanger comprising at least a first internal circuit (13) through which there passes a refrigerant fluid subjected to a first pressure and which exchanges heat at least with a second internal circuit (21) of the exchanger through which the refrigerant fluid subjected to a second pressure lower than the first pressure passes, the exchanger comprising at least one cavity (23, 23a, 24) able to contain a thermal storage means which exchanges with the first internal circuit (13) and/or the second internal circuit (21), in which the thermal storage means is stored in the said cavity (23, 23a, 24), **characterized in that** the said exchanger (10) comprises at least two cavities (23, 23a, 24) able to contain the thermal storage means and arranged on each side of a same first internal circuit (13) and of a same second internal circuit (21).

2. Heat exchanger according to Claim 1, in which the first internal circuit (13), the second internal circuit (21) and the cavity (23, 23a, 24) are contained in an airtight enclosure (27) delimiting the exchanger.

3. Heat exchanger according to Claim 1, in which the first internal circuit (13) and the second internal circuit (21) have the same refrigerant fluid passing through them.

4. Heat exchanger according to Claim 1, in which the first internal circuit (13) comprises at least one first inlet (12) and one first outlet (14) for refrigerant fluid, and the second internal circuit (21) comprises at least one second inlet (20) and one second outlet (22) for refrigerant fluid, the said inlets and outlets being distinct.

5. Heat exchanger according to Claim 1, in which the said cavity (23, 23a, 24) is adjacent to the first internal circuit (13) and/or to the second internal circuit (21).

6. Heat exchanger according to Claim 5, in which the cavity (23, 23a, 24) forms a closed volume inside the enclosure (27) delimiting the exchanger.

7. Heat exchanger according to any one of Claims 1 to 3, in which the cavity (23, 23a, 24) exchanges both with the first internal circuit (13) and with the second internal circuit (21).

8. Heat exchanger according to Claim 1, in which the cavity (23, 23a, 24) is interposed between the first internal circuit (13) and the second internal circuit (21) .

9. Heat exchanger according to Claim 1, in which at least one cavity (23, 23a, 24) is delimited by a wall common to the enclosure (27) delimiting the exchanger.

10. Heat exchanger according to Claim 1, in which the first internal circuit (13), the second internal circuit (21) and the cavity (23, 23a, 24) are delimited by substantially flat plates.

11. Heat exchanger according to Claim 1, in which the first internal circuit (13), the second internal circuit (21) and the cavity (23, 23a, 24) are delimited by substantially cylindrical walls.

12. Air conditioning circuit (1) comprising a compressor (2), a gas cooler or condenser (6), an expansion device (16) and an evaporator (17) through which a refrigerant fluid passes in that order, the fluid circulating in a first part of the circuit comprising the gas cooler or condenser (16) and comprised between the compressor (2) and the expansion member (16) is subjected to a first pressure, the fluid circulating in a second part of the circuit comprising the evaporator (17) and comprised between the expansion member (16) and the compressor (2) is subjected to a second pressure lower than the first pressure, **characterized in that** it further comprises a heat exchanger (10) according to any one of the preceding claims.
